# EUROPEAN PATENT APPLICATION

(11) **EP 4 545 413 A1**
(43) Date of publication of application: **30.04.2025**
(21) Application number: 23206331.3
(22) Date of filing: 27.10.2023
(51) Int. Cl.: B64D 15/16

(54) **WING ASSEMBLY AND METHOD FOR DISPERSING MATTER**

(71) Applicant: Airbus Operations GmbH, 21129 Hamburg (DE)
(72) Inventor: LINDE, Peter, 21129 Hamburg (DE); HEGENBART, Matthias, 21129 Hamburg (DE)

(57) **Abstract**

There is provided a wing assembly comprising a fixed wing portion (5), a high lift device (7, 9) connected to the fixed wing portion (5) and a matter dispersion arrangement located in at least one of the fixed wing portions and the high lift device. The matter dispersion arrangement comprises an electro-active polymer (EAP) (20) comprising an elastic polymer (11a) positioned between a first and a second electrode (10, 12) and configurable between a relaxed state in which the first and second electrodes (10, 12) are electrically disconnected from an electrical power source (13) and a compressed state in which the first and second electrodes (io, 12) are electrically connected to an electrical power source (13).

## Description

The present invention relates to a wing for an aircraft and a method for dispersing matter from the wing of an aircraft, as well as to an aircraft comprising such a wing.

The described wing for an aircraft comprises a fixed wing portion and a high lift device connected to the fixed wing portion. A matter dispersion arrangement is located in at least one of the fixed wing portion and the high lift device, and may have use as an ice dispersion arrangement, for example for use during colder environmental conditions (either on the ground or in flight) when ice buildup on the wings of an aircraft is likely, and may inhibit the abilities of said aircraft when in flight, thus causing issues with aircraft performance and safety.

Currently, several means of dispersing matter (e.g. ice) from the wings of an aircraft are already in existence. One such method involves the spraying of the wings of the aircraft to remove matter. In the case of substantial ice buildup on the wings of an aircraft, a heated liquid containing glycol may be sprayed onto the aircraft wings by a ground crew to remove existing ice buildup, and to suppress further ice buildup, while an aircraft is located on the ground before flight.

While this method is indeed effective, the desired suppression of ice buildup lasts only a short time, during which the sprayed aircraft must depart. In case of an unexpected delay or severe weather conditions, an aircraft may not be able to depart on time, meaning that another spraying is necessary. Further, this method is not able to be used once the aircraft has taken flight.

Another known means of dispersing matter, and in particular ice, from the wings of an aircraft, is through the heating of the wings of the aircraft (in particular, the leading edge of the wings) by bleed air e.g. taken from the engines of an aircraft. In this case, a section of piping or tubing is run through the wing of the aircraft, and heated bleed air is circulated onto the interior surface of the wings, and in particular to the interior surface of the leading edge of the aircraft. This has the effect of raising the temperature at the wings of the aircraft, thereby preventing the formation of ice on these parts of the wings. This system may be used during taxying and also during flight of the aircraft. The system however requires the presence of a tube or pipe in the wings, which requires space and also may increase the weight of the wings by a relatively large amount. Some of the heated bleed air may be lost from the wing having provided little or no heating thereof, and therefore such a system may have a lower efficiency.

A further known system that also involves the heating of the interior surface of the aircraft wing, and in particular the leading edge thereon, involves the use of a heating mat that may be placed inside the wing, e.g. inside the leading edge thereof, to increase the surface temperature of the wing and prevent the buildup of ice thereon.

The object of the present invention is to provide a wing assembly having a compact, lightweight and highly available system for dispersing matter thereon.

The object is achieved in that a wing assembly is provided having a matter dispersion arrangement that comprises an electro-active polymer (EAP) that comprises an elastic polymer positioned between a first and second electrode and configurable between a relaxed state in which the first and second electrodes are electrically disconnected from an electrical power source and a compressed state in which the first and second electrodes are electrically connected to a voltage source. Such a system provides a lightweight and compact alternative to the presently available options. Further the system is able to be made highly available since it does not rely on, for example, the presence of a ground crew or of a supply of bleed air to be operated, but may be operated by a power source. The nature of the EAP is also such that it may easily be integrated or positioned into the wing of an aircraft, being that it comprises an elastic polymer and electrodes, without compromising the structural integrity of the wing (for example as may be the case if a heating mat comprising spiral wires was integrated into the wing material.

In some examples, the wing assembly may comprise a control unit in communication with the matter dispersion arrangement for configuring the EAP between the relaxed state and the compressed state. The wing assembly may comprise a power source (e.g. a voltage source). In some examples the control unit, or both the control unit and the power source may be considered to be part of the matter dispersion arrangement, in which case the control unit may be in communication with the EAP and may receive power from the power source.

In some examples, the matter dispersion arrangement may be (wholly or partly) integrally formed with the high lift device. The high lift device may be a slat or a flap of the wing of an aircraft. For example, the EAP may be integrally formed with the high lift device. Alternatively, the EAP may be formed in the fixed wing portion (e.g. integrally formed into the outer skin of the fixed wing portion), outside of any high lift devices. The EAP may be integrally formed with a high lift device at or directly adjacent the leading edge (e.g. in the case of a slat) or trailing edge (e.g. in the case of a flap) of said high lift device. Where the high lift device is a laminar composite material, the EAP may be formed as a layer of laminar composite device. The EAP may be formed in an outer skin of the high lift device. As such, the matter dispersion arrangement (and the EAP) may have minimal space requirements in the high lift device, and in the wing of the aircraft.

The EAP may be elastic. For example, the first and second electrode may be or comprise an elastic material, as may the elastic polymer. The first and second electrode may be or comprise a polymer. As such, elastic deformation of the entire EAP (e.g. the electrodes and the elastic polymer positioned therebetween) may be possible. The elastic polymer positioned between the first and second electrodes may have a lower electrical conductivity than the first and second electrodes. The elastic polymer positioned between the first and second electrodes may be non-electrically conductive.

Configuration from the relaxed to the compressed state may cause a reduction in one dimension of the EAP and an increase in another dimension of the EAP. For example, the thickness of the EAP in the relaxed state may be greater than in the compressed state, whereas the length and width of the EAP in the relaxed state may be less than the length and width of the EAP in the compressed state.

In some examples, the matter dispersion arrangement may be an ice dispersion arrangement, i.e. the matter dispersion arrangement may be specifically intended for the removal of ice from the aircraft.

A second aspect relates to a method for dispersing matter from the wing of an aircraft. The method comprises providing a matter dispersion arrangement comprising an electro-active polymer (EAP) comprising an elastic polymer positioned between a first and a second electrode in a wing assembly of an aircraft, electrically connecting the matter dispersion arrangement to an electrical power source, applying a voltage across the first and second electrodes so as to configure the EAP to a compressed state by moving the first electrode towards the second electrode and compressing the elastic polymer; and removing the applied voltage across the first and second electrodes so as to configure the EAP to a relaxed state decompress the elastic polymer.

The method may further comprise connecting a control unit to the matter dispersion arrangement and using the control unit to repeatedly configure the EAP between the compressed state and the relaxed state.

The method may comprise repeatedly configuring the EAP between the compressed state and the relaxed state at a rate of at least 20 kHz.

The method may comprise applying a time-variable voltage across the first and second electrodes so as to repeatedly configure the EAP between the relaxed and compressed state.

The method may comprise applying a time-variable incrementally increasing and decreasing sinusoidal voltage across the first and second electrodes so as to incrementally configure the EAP between the relaxed state and a maximally compressed state.

A third aspect relates to a wing of an aircraft comprising a wing assembly according to any of the previously described aspects.

A fourth aspect relates to an aircraft comprising a wing according to the preceding claim.
- Figure 1: is a perspective view of an aircraft, showing the wings of the aircraft;
- Figure 2A and 2B: are schematic illustrations of electro-active polymers (EAPs);
- Figure 3: is a cross-sectional illustration of an EAP in a wing slat;
- Figure 4: is a cross-sectional illustration of an EAP in a wing flap.

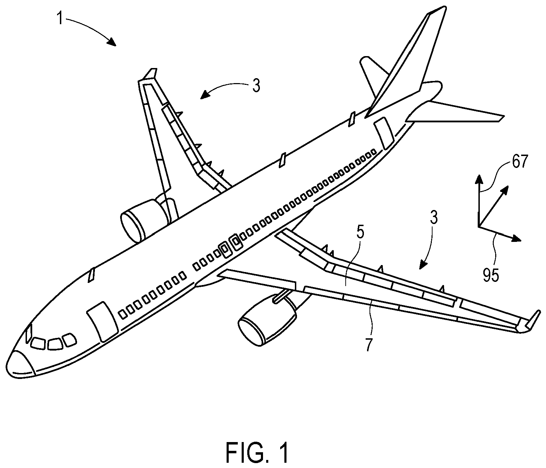

In Figure 1 an aircraft 1 according to an embodiment of the present invention is illustrated. The aircraft 1 comprises a wing 3 that is formed according to an embodiment of the present invention.

As shown in Figure 1, each wing 3 comprises a fixed wing portion 5 and a plurality of slats 7 located on the leading edge of each wing 3, while at the trailing edge of each wing 3 are illustrated a plurality of flaps. Both the slats 7 and the flaps are moveable relative to the fixed wing portion 5, and may be connected thereto via an appropriate connection assembly. Additionally illustrated in Fig. 1 is a wing thickness direction 67 and the spanwise direction 95.

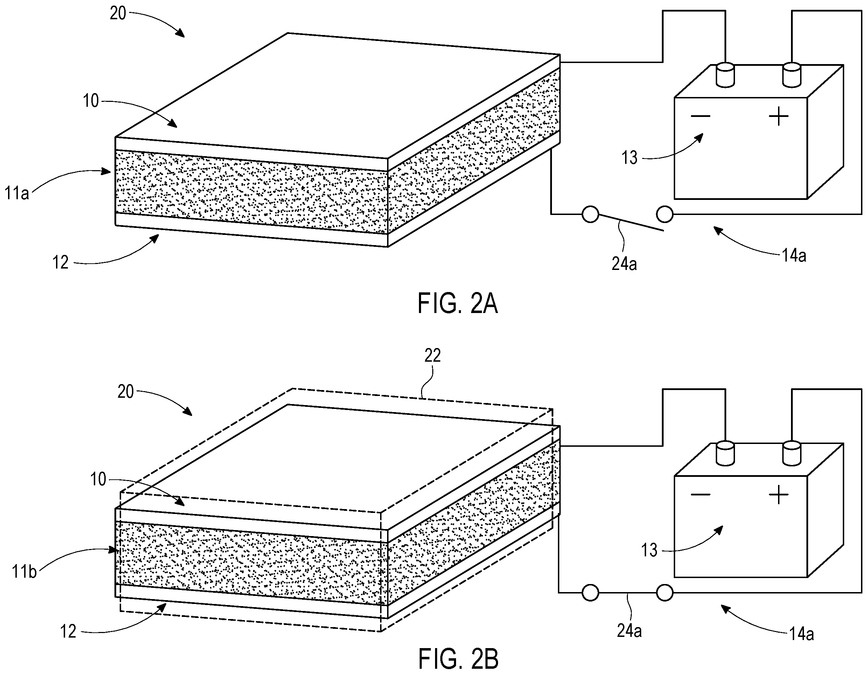

Figures 2A and 2B schematically illustrate an example of an electro-active polymer (EAP) 20. The EAP 20 comprises a first electrode 10 and a second electrode 12 with an elastic polymer 11a, 11b located therebetween. Here, Figure 2A illustrates the EAP 20 in the relaxed state, while Figure 2B illustrates the EAP 20 in the compressed state, with the shape of the EAP 20 in the relaxed state illustrated in broken outline 22 for reference.

As shown in Figures 2A and 2B, the electrodes 10, 12 are each provided in the form of an electrode layer with the elastic polymer 11a, 11b located therebetween, giving the EAP 20 a laminate structure. The electrodes may be or comprise a conductive polymer, such as poly(3, 4 ethylene-dioxythiophene)/polystyrene sulphonate, known as PEDOT/PSS. The electrodes 10, 12 may be themselves elastic, and may be referred to as a dielectric polymer. The elastic polymer 11a, 11b may be or comprise a thermoplastic polyurethane-elastomer such as Epurex LPT 4207 CU-T, and/or another elastic polymer that provides a compressive strength above 50MPa.

Each of the electrodes 10, 12 are connected to a power source 13 via a respective electrical circuit 14a, 14b, which enables a voltage to be applied across the first and second electrodes. The voltage may be selectively applied, e.g. by a user deciding to close or open an electrical switch 24, as is the case in this example.

As is clearly visible in Figure 2A, with the electrical switch 24a in the open configuration no voltage is applied across the electrodes 10, 12 and the EAP 20 is in the relaxed configuration. Once the electrical switch 24b is in the closed configuration, a voltage is applied across the electrodes 10, 12, causing the EAP to be configured to the compressed state as a result of attraction between the two electrodes 10, 12 when a voltage is applied thereto via electrostatic pressure. Further, the degree of attraction between the electrodes 10, 12, and therefore the degree by which the elastic polymer 11a, 11b is compressed may be varied depending on the voltage applied across the electrodes 10, 12.

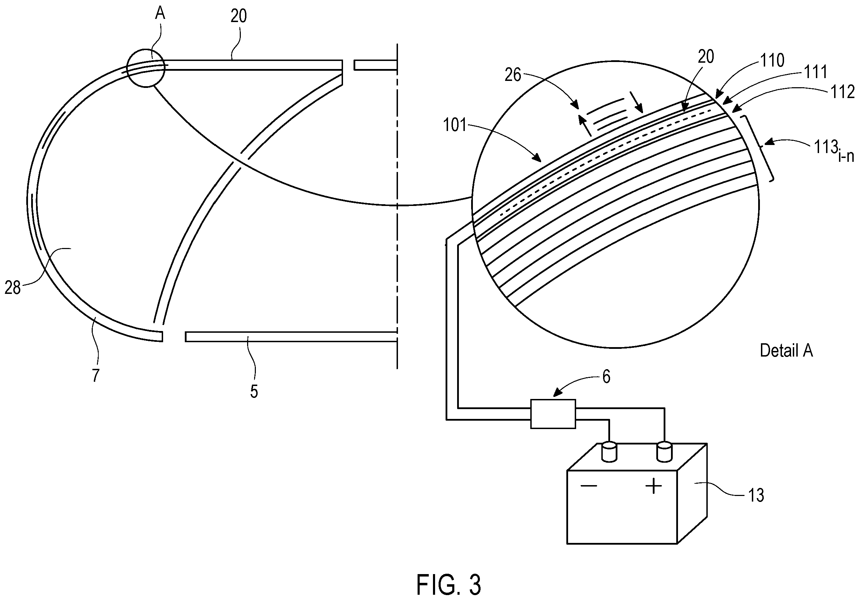

Figure 3 illustrates a cross-section of a wing assembly and shows an example of an EAP 20 located in the wing 3 of an aircraft, with Detail A additionally shown to provide section A in more detail. Here, the fixed wing portion 5 and a high lift device which in this case is the slat 7 are illustrated in cross-section. In this example, the EAP 20 is integrally formed with the slat 7. In particular, the EAP 20 is integrally formed with the outer skin of the slat 7, which has a composite laminate structure. Here each of the layers 113 of the laminate structure of the slat 7 are shown in Detail A, while the first and second electrodes 110, 112 and the elastic polymer 111 therebetween are also illustrated.

Since the EAP 20 also has a laminate structure, it may be integrally formed with the composite laminate structure of the slat 7, thereby occupying minimal space in the wing 3 itself, and also adding minimal weight to the wing 3 since the composite materials from which the EAP 20 is formed are relatively lightweight.

Additionally illustrated is a control unit 6. The control unit may be positioned between the power source 13 and the electrical connection with the EAP 20, and may permit a user to configure the EAP 20 between the relaxed state and the compressed state by selectably permitting a voltage to be applied across the illustrated first and second electrodes 110, 112. Additionally, the control unit 6 may permit a user to vary the voltage that is applied to the electrodes 110, 112, thereby varying the level of compression experienced by the EAP 20 in the compressed state.

The control unit 6 and the power source 13 may be located in the wing 3 itself, or may be located on another part of the aircraft, for example in the cockpit. In some examples, the matter dispersion arrangement may comprise multiple power sources, for example for reasons of redundancy. For instance, one power source may be located in the fuselage of the aircraft (e.g. in the cockpit) while another may be located in the wing itself. Thus, in the case when one power source is not able to be used, the EAP 20 may still be configured between the relaxed and the compressed configuration through use of the secondary power source.

In use according to the illustrated example of Figure 3, the EAP 20 may be configured from the relaxed state to the compressed state in order to create movement of the outer surface of the slat 7, illustrated in Detail A by arrows 26. The EAP 20 may be compressed by up to 60% of its thickness, for example between 30% and 60% of its thickness in a state of maximum compression. This movement may have the effect of braking up any matter (e.g. ice or other unwanted detritus that may build up on the slat 7) and causing said matter to fall away from the surface of the wing (in this case the slat 7). The control unit 6 may be used to cause a voltage to be repeatedly applied across the first and second electrodes 110, 112 and then subsequently removed in a cycle at a very high rate in order to create a vibration effect on the surface of the slat 7, which may further improve the ability of the matter dispersion arrangement to remove matter from the surface of the wing. In some examples, the matter dispersion arrangement may be cycled between the relaxed and compressed configuration at rates in the ultrasonic frequency range (e.g. at 20 kHz or greater), which may be particularly effective at breaking up and removing matter such as ice which may have formed on the wings 3.

In addition to assisting with the removal of matter which may have built up on the wings 3, the EAP 20, when the EAP 20 is integrated into the composite laminate of the wing 3 (e.g. of the slat 7, as is shown in Figure 3) the EAP 20 may also contribute to the stiffness of the slat 7 and/or wing 3, as well as provide impact protection. The tensile strength of the EAP 20 may be in the range from 30 to 56 MPa. Further, since the EAP 20 requires no moving parts, there is a reduced likelihood of the EAP 20 becoming damaged or inoperable during use, making the use of a matter dispersion arrangement as described a robust solution.

In addition to permitting the user to configure the EAP 20 between the relaxed and compressed state at very high rates, the control unit 6 may additionally be used to apply a time-variable voltage across the first and second electrodes 110, 112, for example an incrementally increasing and decreasing sinusoidal voltage across the first and second electrodes 110, 112.

In this scenario, the EAP 20 may be configured between a relaxed state and a maximally compressed state, since the degree of compression of the EAP 20 varies depending on the voltage applied across the electrodes 110, 112. The voltage across the first and second electrodes 110, 112 may be varied in a sinusoidal pattern from 0V (zero volts) to a maximum voltage such that compression of the EAP 20 is also achieved in a sinusoidal pattern, and the EAP 20 is configurable from a relaxed state, through an intermediate compressed state to a maximum compressed state, at which the voltage across the electrodes 110, 112 is at a maximum value, then back through the intermediate compressed state to the relaxed state.

While in the example of Figure 3, the EAP 20 is illustrated as being integrally formed into the composite material of the slat 7, it should also be noted that other examples may be possible in which the EAP 20 is attached e.g. to an interior surface of the wing 3 or slat 7, and may be contained in a cavity 28 defined by the outer skin of the slat 7. In such an example, the EAP 20 may be able to be retrofitted to a slat 7 or wing 3 of an existing aircraft.

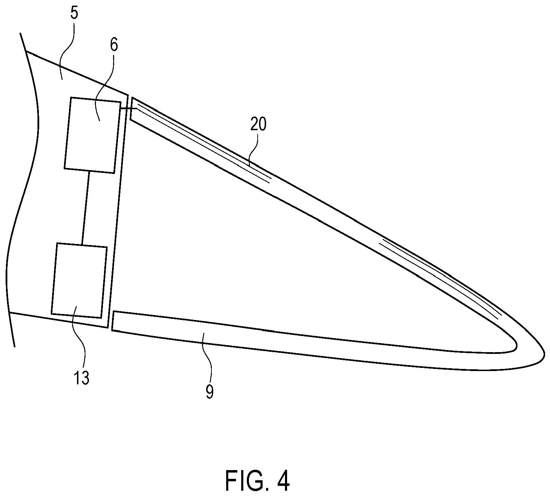

In Figure 4 there is illustrated a wing assembly showing a high lift device in the form of a flap 9 of an aircraft wing 3, where the flap 9 is connected to the fixed wing portion 5 of the aircraft wing 3. As with the example of the slat 7 of Figure 3, the flap 9 may be made of a composite laminate material into which an EAP 20 may be integrated. Alternatively, an EAP 20 may be located on an interior surface inside a cavity of the flap 9, as has also been described in relation to the slat 7 in Figure 3.

Additionally illustrated in Figure 4, a power source 13 and a control unit 6 are located in the fixed wing portion 5 of the aircraft wing 3 in this example, and are connected to the EAP 20 located in the flap 6. As previously described, the power source 13 and the control unit 6 may be optionally located in the wing 3 or in the fuselage of the aircraft. In some examples, a power source 13 may be provided centrally (e.g. in the fuselage of the aircraft) as well as in the wing 3, thereby reducing the chances that the matter dispersion arrangement will lack a source of power required for operation.

An aircraft may comprise a matter dispersion unit located in one or both of the slats 7 and flaps 9.

## Claims

1. A wing assembly, comprising:
a fixed wing portion (5);
a high lift device (7, 9) connected to the fixed wing portion (5);
a matter dispersion arrangement located in at least one of the fixed wing portions and the high lift device;
wherein the matter dispersion arrangement comprises an electro-active polymer (EAP) (20) comprising an elastic polymer (11a) positioned between a first and a second electrode (10, 12) and configurable between a relaxed state in which the first and second electrodes (10, 12) are electrically disconnected from an electrical power source (13) and a compressed state in which the first and second electrodes (10, 12) are electrically connected to an electrical power source (13).

2. The wing assembly of claim 1, further comprising a control unit (6) in communication with the matter dispersion arrangement for configuring the EAP (20) between the relaxed state and the compressed state, and an electrical power source (13).

3. The wing assembly of claim 1 or 2, wherein the first and second electrodes (10, 12) are formed from an elastic material.

4. The wing assembly of any preceding claim, wherein the matter dispersion arrangement is integrally formed with the high lift device (7, 9).

5. The wing assembly of claim 4, wherein the matter dispersion arrangement is formed within an outer skin of the high lift device (7, 9).

6. The wing assembly of claim 4 or 5, wherein the matter dispersion arrangement is formed at a leading edge of the high lift device (7, 9).

7. The wing assembly of any preceding claim, wherein the high lift device is a slat (7) or a flap (9).

8. The wing assembly of any preceding claim, wherein the matter dispersion arrangement is an ice dispersion arrangement.

9. A method for dispersing matter from the wing of an aircraft, comprising:
providing a matter dispersion arrangement comprising an electro-active polymer (EAP) (20) comprising an elastic polymer (11a) positioned between a first and a second electrode (10, 12) in a wing assembly of an aircraft (1);
electrically connecting the matter dispersion arrangement to an electrical power source (13);
applying a voltage across the first and second electrodes (10, 12) so as to configure the EAP (20) to a compressed state by moving the first electrode (10) towards the second electrode (12) and compressing the elastic polymer (11a); and
removing the applied voltage across the first and second electrodes (10, 12) so as to configure the EAP (20) to a relaxed state decompress the elastic polymer (11a).

10. The method of claim 9, comprising connecting a control unit (6) to the matter dispersion arrangement and using the control unit (6) to repeatedly configure the EAP (20) between the compressed state and the relaxed state.

11. The method of claim 10, comprising repeatedly configuring the EAP (20) between the compressed state and the relaxed state at a rate of at least 20 kHz.

12. The method of any of claims 9 to 11, comprising applying a time-variable voltage across the first and second electrodes (10, 12) so as to repeatedly configure the EAP (20) between the relaxed and compressed state.

13. The method of any of claims 9 to 12, comprising applying a time-variable incrementally increasing and decreasing sinusoidal voltage across the first and second electrodes (10, 12) so as to incrementally configure the EAP (20) between the relaxed state and a maximally compressed state.

14. A wing (3) of an aircraft (1) comprising a wing assembly according to any of the preceding claims.

15. An aircraft (1) comprising a wing (3) according to the preceding claim.
